(19) Europäisches Patentamt
European Patent Office
Office européen des brevets

(11) **EP 1 202 147 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.⁷: $G05D\ 19/02$

(21) Anmeldenummer: **01123344.2**

(22) Anmeldetag: **09.10.2001**

(54) **Verfahren zur Kompensation mechanischer Schwingungen in Maschinen**

Method for compensating mechanic vibrations in machines

Procédé pour compenser des vibrations mécaniques dans des machines

(84) Benannte Vertragsstaaten:
**AT BE CH CY DE DK ES FI FR GB GR IE IT LI LU MC NL PT SE TR**

(30) Priorität: **26.10.2000 DE 10053237**

(43) Veröffentlichungstag der Anmeldung:
**02.05.2002 Patentblatt 2002/18**

(73) Patentinhaber: **Heidelberger Druckmaschinen Aktiengesellschaft
69115 Heidelberg (DE)**

(72) Erfinder: **Nöll, Matthias
64331 Weiterstadt (DE)**

(56) Entgegenhaltungen:
EP-A- 0 230 518      DE-A- 19 614 300
DE-A- 19 911 096     US-A- 4 039 873
US-A- 5 596 931

**Beschreibung**

Die Erfindung betrifft ein Verfahren zur Kompensation einer mechanischen Schwingung, insbesondere einer Rotationsschwingung, die ein durch eine Anzahl diskreter Frequenzanteile näherungsweise darstellbares Frequenzspektrum aufweist, an einer Maschinenwelle, insbesondere in einem Druckwerk oder einer Druckmaschine, vermittels wenigstens eines direkt oder indirekt auf die Maschinenwelle einwirkenden Aktuators.

Des Weiteren betrifft die Erfindung ein Druckwerk mit wenigstens einer vermittels eines Aktuators angetriebenen Maschinenwelle und einer Messvorrichtung zur Aufnahme der mechanischen Schwingung der Maschinenwelle.

Unter einer mechanischen Schwingung sind sowohl periodische Änderungen einer oder mehrerer Koordinaten der Maschinenwelle, beispielsweise Rotationsschwingungen, Vibrationsschwingungen oder dergleichen, als auch Superpositionen oder Überlagerungen von mehreren periodischen Änderungen zu verstehen. Der im folgenden gewählte Ausdruck Maschinenwelle bezeichnet eine mathematische Drehachse und kann dabei insbesondere jede Welle, Achse, Maschinenachse, Walze, Zylinder oder dergleichen einer Maschine sein. Der Ausdruck Maschinenwelle umfasst dabei im folgenden auch eine virtuelle Drehachse, also ein aus Koordinatenwerten einer oder mehrerer Drehachsen errechneten Signals, insbesondere die Differenz zwischen Koordinaten zweier reeller Maschinenwellen.

Bei Maschinen mit Geschwindigkeits- oder Lageregelung wenigstens einer Maschinenwelle können durch Kurvenscheiben, Unwuchten oder andere konstruktive Gegebenheiten wechselnde Momente auf die geregelte Welle wirken. In Abhängigkeit vom Übersetzungsverhältnis zwischen der Welle des ursächlichen Moments und der geregelten Welle werden letzterer Schwingungen überlagert, deren Frequenz proportional zu ihrer Rotationsgeschwindigkeit ist, das heißt, eine feste Maschinenordnung hat. Des Weiteren können Anregungen mit fester, von der Geschwindigkeit der geregelten Welle unabhängigen Frequenz der Rotationsbewegung überlagert sein. In beiden Situationen sind im Frequenzspektrum der mechanischen Schwingung von Position, Geschwindigkeit und Beschleunigung der geregelten Welle störende diskrete Frequenzen enthalten, welche im folgenden, unabhängig von ihrer Herkunft, als Störungen bezeichnet werden. Soll die Maschinenwelle mit einer konstanten Geschwindigkeit drehen, so führen Störungen zu Abweichungen von der Sollgeschwindigkeit bzw. dem umlaufenden Sollwinkel, welche nicht vollständig ausgeregelt werden können, sondern sich nur mit erhöhtem Aufwand beim Antrieb auf ein hinreichendes Maß reduzieren lassen.

Insbesondere bei Druckmaschinen, seien es Bogen- oder Rollendruckmaschinen, hat die Genauigkeit, mit der die Geschwindigkeit der geregelten Welle eingehalten bzw. einer umlaufenden Sollposition gefolgt wird, entscheidenden Einfluss auf die Produktqualität. Störungen, welche ein ganzzahliges Frequenzverhältnis zur Rotationsfrequenz der geregelten Welle eines Papierführungszylinders haben, sind im Allgemeinen vernachlässigbar, da sie bei allen Druckbildern bzw. Druckbögen gleich sind. Störend sind hingegen alle anderen Frequenzen, weil sie zum sogenannten Dublieren führen können, wenn mit anderen Worten aufeinander folgende Bögen versetzt bedruckt werden.

Besteht eine Bogendruckmaschine aus mehreren, getrennt angetriebenen, mechanisch entkoppelten Teilen, beispielsweise Druckwerken, Druckwerkgruppen oder dergleichen, so machen sich Schwankungen der Winkeldifferenz zwischen zwei aufeinanderfolgenden Papierführungszylindern, also zwei geregelten Wellen, bei der Bogenübergabe zwischen den Teilen der Druckmaschine direkt als Schwankungen des Umfangspassers bemerkbar. Gewünscht ist hierbei ein von Bogen zu Bogen gleicher Übergabewinkel, der jedoch durch Schwingungen nicht ganzzahliger Ordnung beeinträchtigt wird.

Es sind bereits diverse Vorrichtungen und Verfahren zur Dämpfung von mechanischen Schwingungen, insbesondere Rotationsschwingungen, in Druckmaschinen bekannt.

Aus EP 0 592 850 B1 ist eine Vorrichtung und ein Verfahren zur Dämpfung von mechanischen Schwingungen von Druckmaschinen bekannt. Diese weist mindestens ein Betätigungsglied und einen Schwingungsaufnehmer auf, diese können ebenfalls in einem Regelkreis angeordnet sein. Die Dämpfung von druckqualitätsmindernden mechanischen Schwingungen im Bedruckstoff führenden System einer Druckmaschine ist dabei auf die Kompensation asynchroner, also nur nicht-periodisch mit den Umdrehungen der drehenden Teile auftretender Schwingungen gerichtet.

In der DE 44 12 945 A1 wird eine Vorrichtung und ein Verfahren zur Dämpfung von mechanischen Schwingungen von Druckmaschinen offenbart, welches ebenfalls eine Kompensation ganzzahliger Schwingungsordnungen ermöglicht. Die Ermittlung der Daten zur Ansteuerung der Betätigungsglieder erfolgt entweder durch Berechnung oder durch Messung in einem Probelauf der Druckmaschine.

Die DE 199 14 627 A1 betrifft ein Verfahren und eine Vorrichtung zur Kompensation der Drehschwingung in einer Druckmaschine, welches derart ausgestaltet ist, dass mindestens eine Eigenform der Druckmaschine bestimmt wird und dass für mindestens einen Ort, an dem diese Eigenform nicht Amplitude 0 hat, ein jeweiliges Gegenmoment für die Kompensation der Momente, welche zu Schwingungen in der Eigenform anregen, aufgebracht wird.

Weiteren Stand der Technik bildet die DE 197 49 134 A1. Darin wird eine aktive Schwingungsdämpfungsvorrichtung und ein Verfahren zur Identifikation der Übertragungsfunktion bei einer aktiven Schwingungsdämpfungsvorrichtung offenbart. Eine Regeleinrichtung liest ein Restschwingungssignal von einem Restschwingungsdetektor der aktiven Schwingungsdämpfungseinrichtung synchron zu einem vorbestimmten Eingabeabtasttaktgeber ein. Nach dem Lesen des Restschwingungssignals als Zeitreihe für jede Frequenz wird eine Berechnung einer FFT (Fast Fourier Transformation) für jede Zeitreihe durchgeführt, um eine Frequenzkomponente der ursprünglichen sinusförmigen Welle zu erhalten. Eine Berechnung der inversen FFT wird dann für das Ergebnis der Zusammensetzung einer jeden erhaltenen Frequenzkomponente durchgeführt, um eine Impulsantwort als Übertragungsfunktion abzuleiten.

Des Weiteren wird in der EP 0 425 352 B1 eine Vorrichtung zur aktiven Dämpfung von Schwingungen, deren Energien in Frequenzen, welche eine fundamentale und deren harmonische umfassen, konzentriert ist, offenbart. Die Vorrichtung, welche zur Dämpfung von Schwingungen eines mechanischen Teils eingesetzt wird, umfasst Schwingungsaufnehmer, welche charakteristische elektrische Signale, in Amplitude und Phase, der Vibration an einer Stelle des mechanischen Teils aufnehmen, wenigstens einen Aktuator, welcher eine Kraft auf das mechanischen Teil entgegen der Vibration ausüben kann, und eine Recheneinheit, welche mit dem Schwingungsaufnehmer und dem Aktuator verbunden ist. Die Ausgangssignale jedes Schwingungsaufnehmers werden einer synchronen Detektion mit Hilfe von Referenzsignalen, welche den verschiedenen Frequenzen, die einer Energiekonzentration entsprechen, umfassen, unterzogen. Dazu wird jedes Ausgangssignal nach einer hinreichenden Verstärkung einer Stichprobenerhebung und Analog-Digitalwandlung für jede durch einen Synthesizer generierte Frequenz unterworfen. Die Stichproben erfahren eine synchrone Demodulation, welche eine Multiplikation und eine Passage durch ein Tiefpassfilter und für jede zurückgehaltene Frequenz umfasst. Die Referenzsignale sind unter Ausnutzung eines linearen Zusammenhangs mit der fundamentalen Frequenz mit unveränderter Phase gewonnen. Die Recheneinheit führt einen rekursiven Anpassungsalgorithmus für jede Frequenz, an welcher Energie in der mechanischen Schwingung konzentriert ist, derart aus, dass jeder Aktuator ein Signal erhält, welches ihm eigen ist und die Summe der Beiträge der verschiedenen Frequenzen beinhaltet.

In der DE 196 14 300 A1 wird ein Verfahren zur selbstregulierenden Kompensation der Auswirkung des ungleichmäßigen Rundlaufs einer Rolle oder Haspel für die Bundschlagskompensation bei einer Haspelanlage oder die Aufwicklung oder Abwicklung von flächigem Gut offenbart. Dabei dreht sich die Rolle durch den sich verändernden Bundradius oder Rollenradius mit veränderte Geschwindigkeit. Der Zugistwert wird durch mindestens eine drehharmonische Sinusfunktion ausschließlich ganzer Ordnung approximiert, deren Argument der Rollendrehwinkel ist, wobei die Sinusapproximation nach der orthogonalen Korrelation oder gemäß der harmonischen Analyse nach Fourier erfolgt und Schätzwerte für die Amplitude und die Phase des durch den ungleichmäßigen Rundlauf bewirkten Sinussignals gebildet werden. Der Momentsollwert für die Rolle wird mit einem aus den Schätzwerten berechneten Zusatzmoment beaufschlagt.

Aus dem Dokument US 5,596,931 gehen eine Vorrichtung und ein Verfahren zur Kompensation einer mechanischen Schwingung in einer Druckmaschine hervor. Wenigstens ein Aktuator ist einem rotierenden Teil, insbesondere einer Maschinenwelle, zugeordnet. Jeder der Aktuatoren weist eine Messeinrichtung zur Aufnahme einer mechanischen Schwingung auf und jeder Aktuator ist derart gesteuert, dass Korrekturmomente derart der mechanischen Schwingung überlagern werden, dass die Amplitude der Schwingung der Maschinenwelle reduziert wird. Die Messeinrichtungen sind mit einer Steuerungseinrichtung mit Signalverarbeitungseinheit verbunden, welche mittels einer Fast Fourier Transformation (FFT) die Amplituden und Phasen der Frequenzanteile der mechanischen Schwingung näherungsweise bestimmt.

Die Ermittlung geeigneter Kompensationsdaten, insbesondere für Druckmaschinen, stellt ein Problem bisheriger Kompensationsverfahren und Kompensationsvorrichtungen dar, die deren breite praktische Anwendung erschwert. Wird eine Speichereinrichtung für die Kompensationsdaten verwendet, so ist bei geläufigen bisherigen Kompensationsansätzen vorab eine Berechnung oder ein Probelauf zur Messung geeigneter Kompensationsdaten erforderlich. Beide Methoden gestalten sich als schwierig, zeit- und kostenintensiv. Typische Kompensationsansätze in Druckmaschinen betrachten Schwingungen, bestehend aus mehreren Frequenzen, als Ganzes. Dadurch ist eine differenzierte Anpassung der Kompensation in Abhängigkeit der Maschinendynamik, Regelung, Störung oder dergleichen, nur schwer möglich. Insbesondere eine Anpassung an mit der Zeit stark veränderliche Schwingungsformen oder eine veränderte Maschinendynamik ist nur schwer zu realisieren. Bei Berechnung der Schwingungen besteht die Gefahr systematischer Fehler bei vereinfachenden oder sogar falschen Annahmen. Ein derartiger Ansatz impliziert, dass nur einer Berechnung zugängliche Schwingungen kompensierbar sind. Des Weiteren bergen herkömmliche Probeläufe zur Ermittlung der Schwingung die Gefahr von Messfehlern durch andere, weitere Störungen. Im Fall der Ausnutzung der Bestimmung von Eigenformen einer Maschine, ist eine maschinenspezifische Auslegung erforderlich.

Der Erfindung liegt die Aufgabe zugrunde, unerwünschte Schwingungen, auch als Störung bezeichnet, an mindestens einer mit weitgehend konstanter Geschwindigkeit drehenden Welle oder virtuellen Maschinenwelle einer Maschine zu reduzieren.

Diese Aufgabe wird erfindungsgemäß durch ein Verfahren mit den Merkmalen gemäß Anspruch 1 und durch ein Druckwerk mit den Merkmalen gemäß Anspruch 10 gelöst.

Existierende Störungen in Form von mechanischen Schwingungen an einer Maschinenwelle weisen näherungsweise ein durch eine Anzahl diskreter Frequenzanteile darstellbares Frequenzspektrum auf. Typischerweise sind die dabei auftretenden Frequenzen diskret und näherungsweise konstant, hängen aber von der Maschinengeschwindigkeit ab, haben also eine feste Ordnung, oder sind unabhängig von dieser. Wie bereits erwähnt, stören Anregungen, welche gerade der Umdrehungsfrequenz oder einer Vielfachen davon entsprechen, bei Druckmaschinen im Allgemeinen nicht, können jedoch ebenfalls mit dem erfindungsgemäßen Verfahren eliminiert werden. Entsprechendes gilt für virtuelle Maschinenwellen, also für ein aus der Position, Geschwindigkeit oder Beschleunigung einer oder mehrerer realer Wellen über einen im (bevorzugt linearen) Zusammenhang berechnetes Signal, insbesondere die Differenz der Koordinaten zweier realer Wellen.

Das erfindungsgemäße Verfahren zur Kompensation einer mechanischen Schwingung oder einer Störung, insbesondere Rotationsschwingungen, die ein durch eine Anzahl diskreter Frequenzanteile näherungsweise darstellbares Frequenzspektrum aufweist, an einer Maschinenwelle, insbesondere in einem Druckwerk, vermittels eines direkt oder indirekt auf die Maschinenwelle einwirkenden Aktuators zeichnet sich dadurch aus, dass diskrete Frequenzen dieser mechanischen Schwingung separat kompensiert werden. Dabei kann es sich sowohl um feste Frequenzen als auch feste Ordnungen, mit anderen Worten Frequenzen, welche in einem festen Verhältnis zur Umdrehungsfrequenz der Welle stehen, handeln. Jedem diskreten Frequenzanteil der mechanischen Schwingung wird unabhängig von den anderen Frequenzanteilen wenigstens ein im Wesentlichen harmonisches Moment gleicher Frequenz mit bestimmter Amplitude und Phase derart vom direkt oder indirekt auf die Maschinenwelle einwirkenden Aktuator überlagert, dass die Amplitude der Schwingung der Maschinenwelle für die Frequenz reduziert wird. Mit anderen Worten erfolgt die Kompensation, in dem für jeden zu kompensierenden Frequenzanteil des Frequenzspektrums separat ein nach Amplitude und Phase bestimmtes im Wesentlichen harmonisches Moment, also ein sinus- oder cosinusförmiges Moment, derselben Frequenz mit bestimmter Amplitude und Phase so einem Antriebsmoment überlagert wird, dass der Anteil an der Schwingung mit dieser diskreten Frequenz an der Maschinenwelle reduziert wird. Dabei kann das Kompensationsmoment von einem beliebigen Aktuator, insbesondere einem ohnehin auf die Maschinenwelle direkt oder indirekt einwirkenden Motor ausgeübt werden.

Das erfindungsgemäße Verfahren ermöglicht auch eine Kompensation von nicht in einem ganzzahligen Verhältnis zur Umdrehungsfrequenz der Maschinenwelle stehenden Frequenzen (asynchrone Schwingung), indem sie als synchrone Schwingungen bezogen auf eine Frequenz, die in einem festen Verhältnis zur Umdrehungsfrequenz der Maschinenwelle steht, behandelt werden. Das feste Verhältnis ist in der Regel gebrochen rational, also eine Zahl aus den rationalen Zahlen, wenn die Störung durch ein über Getriebe angekoppeltes Maschinenteil verursacht wird.

Das erfindungsgemäße Verfahren nebst dem erfindungsgemäßen Druckwerk weisen eine Reihe von Vorteilen auf.

Da das Verfahren jeweils bestimmte diskrete Frequenzanteile kompensiert, sind Messungen von Amplitude und Phase der mechanischen Schwingung der Maschinenwelle an wenigstens einem bestimmten Zeitpunkt nur für eine bestimmte Frequenz erforderlich. Dadurch beeinflussen andere Frequenzen oder auch stochastische Störungen der mechanischen Schwingung das Verfahren praktisch nicht. Durch die Iteration von Messungen zu einer diskreten Frequenz im zeitlichen Verlauf werden die jeweils aktuellen Amplituden und Phasen des diskreten Frequenzanteils der mechanischen Schwingung bestimmt, sodass eine zeitnahe Kompensation, angepasst an die jeweilige aktuelle Situation, ermöglicht ist.

Das erfindungsgemäße Verfahren ermöglicht eine einfache Kompensation anharmonischer periodischer Schwingungen mit einer zugeordneten Kreisfrequenz $\omega$ aus dem Zusammenhang $\omega = 2\pi / T$, wobei $T$ die Schwingungsperiode bezeichnet, indem jeweils separat die mit gewissen Amplituden und Phasen versehenen, die anharmonische Schwingung darstellenden harmonischen Schwingungen der Kreisfrequenzen n x $\omega$, wobei n eine natürliche Zahl ist, kompensiert werden. Ebenso ermöglicht das erfindungsgemäße Verfahren die Berücksichtigung der Verstärkungen und Phasenverschiebungen der unterschiedlichen, zur Kompensation eingesetzten Frequenzanteile vom Aktuator zur Kompensationswelle. Bisherige Kompensationsverfahren, welche mit nicht harmonischen Kompensationsmomenten, wie sie in der Regel in Speichereinrichtungen abgelegt sind, arbeiten, können diese Abhängigkeit der Übertragung von der Maschinendynamik nur schwer berücksichtigen, da der im Speicher abgelegte Kurvenverlauf die Amplituden und Phasen der Oberwellen im Bezug auf die Grundwelle festlegt. Die Bestimmung der Amplituden und Phasen einzelner Frequenzanteile dagegen ist flexibel. Das erfindungsgemäße Verfahren hebt also diverse Einschränkungen bestehender Kompensationsverfahren auf und macht dadurch eine Kompensation in der Praxis einfacher.

Des Weiteren kommt das erfindungsgemäße Verfahren ohne eine Berechnung der mechanischen Schwingung der Maschinenwelle aus. Dadurch ist die Gefahr systematischer Fehler bei vereinfachenden oder falschen Annahmen gebannt, eine umfangreiche Modellbildung der Maschine oder ein Berechnungsaufwand durch Spezialisten entfällt.

Ein weiterer Vorteil des erfindungsgemäßen Verfahrens besteht darin, dass eine Anwendbarkeit sowohl bei instationären, das heißt mit der Zeit veränderlichen Schwingungen, bei im Zeitverlauf veränderlichem Maschinenzustand, bei synchronen und asynchronen Schwingungen oder auch bei Schwingungen mit konstanter Frequenz möglich ist. Einzelne Frequenzanteile, welche in einem komplexen Zusammenhang mit der Maschinenfrequenz stehen, seien es Seitenbänder von Schwingungen oder durch Modulation entstandene Schwingungen, sind ebenfalls mit dem erfindungsgemäßen Verfahren kompensierbar.

Prinzipiell können mit dem erfindungsgemäßen Verfahren beliebig oder erforderlich viele unterschiedliche Frequenzanteile kompensiert werden, da sich die Kompensationen gegenseitig nicht beeinflussen. Beispielsweise müssen von der mechanischen Schwingung nur die dominierenden, größten störenden Frequenzanteile bzw. Ordnungen in Amplitude und Phase bekannt sein oder gemessen werden, um diese zu kompensieren. Eine derartige Konzentration auf die Kompensation der störendsten Frequenzen erlaubt bereits bei geringem Aufwand wesentliche Verbesserungen. Da in Abhängigkeit von der Maschinengeschwindigkeit unterschiedliche Ordnungen oder Frequenzanteile kompensierbar sind, können vorteilhafterweise beispielsweise immer alle Schwingungsfrequenzanteile in der Nähe der Resonanzfrequenzen der Maschine oder von Teilen der Maschine kompensiert werden.

Unter Kenntnis der Übertragungsfunktion kann die Einspeisung wenigstens eines Kompensationsmomentes auch weit entfernt von der zu kompensierenden Maschinenwelle erfolgen. Im Allgemeinen ist das Verfahren robust gegenüber Änderungen der Maschinendynamik, wie dem Übergang von der ungeregelten zur geregelten Maschine oder die Wahl unterschiedlicher Regelungsparameter oder Regelungen.

Mit dem erfindungsgemäßen Verfahren oder dem erfindungsgemäßen Druckwerk lässt sich die Qualität der Produkte erheblich steigern, da ein verbesserter von Umdrehung zu Umdrehung gleicher Verlauf von Geschwindigkeit oder Lage in Abhängigkeit des Winkels der Maschinenwelle ermöglicht ist. Das erfindungsgemäße Verfahren erlaubt es, die Trennstellen von mechanisch entkoppelten Bogendruckmaschinen erheblich wiederholgenauer als mit herkömmlichen Verfahren zu positionieren.

Weitere Vorteile und vorteilhafte Ausführungsformen der Erfindung werden anhand der nachfolgenden Figur und deren Beschreibung dargestellt. Es zeigt im Einzelnen:

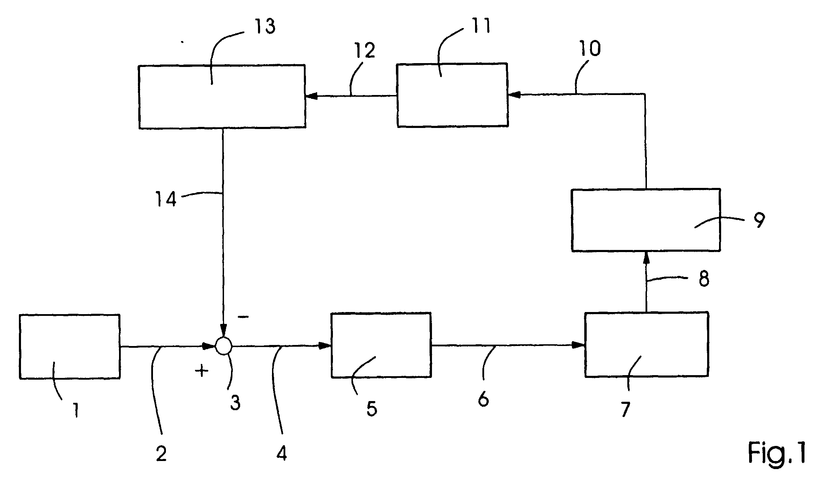

Figur 1    Prinzip der Kompensation für eine feste Kompensationsfrequenz $\omega_S$ bei einer einwirkenden Störung

Anhand der Figur 1 und den nachfolgenden Ausführungen sei die Arbeitsweise des erfindungsgemäßen Verfahrens und des erfindungsgemäßen Druckwerks im Detail beschrieben. Ohne Beschränkung der Allgemeinheit erfolgt die Beschreibung der Kompensation einer mechanischen Schwingung oder Störung einer Maschinenwelle mit einer bestimmten Kreisfrequenz $\omega_S$ oder einer Ordnung r zur Maschinenfrequenz, wobei r aus den reellen Zahlen ist. Da die Kompensation für eine bestimmte Kreisfrequenz $\omega_S$ der mechanischen Schwingung oder Störung unabhängig von anderen Kreisfrequenzen bzw. Ordnungen erfolgt, sogenanntes Superpositionsprinzip, können insbesondere auch beliebig viele unterschiedliche Kreisfrequenzen $\omega_{Si}$, mit i aus den natürlichen Zahlen, oder Ordnungen $r_i$, mit i aus den natürlichen Zahlen, bei mehrfacher, sei es paralleler oder sukzessiver Anwendung des Verfahrens kompensiert werden. Somit wird erreicht, dass eine Maschinenwelle mit konstanter Geschwindigkeit dreht, selbst wenn ungleichförmige Momente auf diese einwirken.

Die reale oder virtuelle Maschinenwelle, an welcher die Schwingung oder Störung kompensiert wird, soll im folgenden auch als Kompensationswelle bezeichnet werden. Sind konstante Ordnungen r zu kompensieren, so ist eine Voraussetzung, dass diese Kompensationswelle keine allzu großen Schwankungen $\delta\omega_S(t)$ um die mittlere Kreisfrequenz $\omega_S$ ausführt, das heißt mit relativ gleichmäßiger Geschwindigkeit dreht. Dieses kann beispielsweise durch eine Geschwindigkeitsregelung oder Winkelregelung dieser Welle oder einer anderen, mit der Kompensationswelle gekoppelten Maschinenwelle erreicht werden. Ein derartiger Fall ist insbesondere bei Druckmaschinen gegeben.

Eine derartige Einschränkung ist erforderlich, da der zwischen Kompensation und Maschinenwelle wirkende Prozess und der für die Messung erforderliche Filter im Allgemeinen unterschiedliche Frequenzen mit unterschiedlichen Verstärkungen und Phasenverschiebungen übertragen. Ist die Frequenzschwankung $\delta\omega_S(t)$ zu groß, so führt dies zu einer Modulation der zu kompensierenden Ordnung r, sowohl bei der Störung an der Kompensationswelle als auch verstärkt bei der Messung des gefilterten Signals, was einer vollständigen Kompensation abträglich ist. Um die Qualität der Kompensation weiter zu steigern, können unter Einsatz des erfindungsgemäßen Verfahrens oder des erfindungsgemäßen Druckwerks selbst Geschwindigkeitsschwankungen der Kompensationswelle weiter reduziert werden. Bei einer Druckmaschine könnte z. B. die ersten Maschinenordnung kompensiert werden, um die Kompensation störender asynchroner Ordnungen zu verbessern.

Die Figur 1 zeigt das Kompensationsprinzip für eine Kompensationsfrequenz $\omega_S$. Die Kompensationsfrequenz kann dabei fest sein, also $\omega_S = 2\pi f_S = const.$ oder aber eine feste Kompensationsordnung, also $\frac{d\varphi_S(t)}{dt} = r\frac{d\varphi_M(t)}{dt} = \omega_S + \delta\omega_S(t)$, wobei $\varphi_S(t)$ den Phasenwinkel der Störung, r die Ordnung der Störung, also das Übersetzungsverhältnis zwischen der gegebenenfalls hypothetischen Störungswelle und der Kompensationswelle und $\varphi_M$ den Winkel der Kompensationswelle bezeichnen. Mit $\delta\omega_S(t)$ ist die Abweichung der Kreisfrequenz von der mittleren Kreisfrequenz der Störung bezeichnet. Ist die Geschwindigkeit der Kompensationswelle konstant, beispielsweise weil alle auftretenden Störungen vollständig kompensiert werden, so gilt $\omega_S t = r\varphi_M(t)$. Die bei geringen Geschwindigkeitsschwankungen auftretenden Unterschiede zwischen den Signalen in beiden Fällen beeinträchtigen die Kompensation fester Ordnungen kaum. Die Darstellung der Wirkungsweise des erfindungsgemäßen Verfahrens kann deshalb hauptsächlich anhand einer Störung mit fester Kompensationsfrequenz $\omega_S$ beschrieben werden. Unterschiede ergeben sich zwischen beiden genannten Fällen jedoch bei der Realisierung, da bei der Kompensation fester Frequenzen alle Schwingungen zeitabhängig, bei Kompensation fester Ordnungen dagegen winkelabhängig sind.

In der Figur 1 ist schematisch in Form eines Regelkreises gezeigt, wie das Prinzip der Kompensation für eine feste Kompensationsfrequenz $\omega_S$ bei einer einwirkenden Störung erfolgt. Ausgehend von einer Störungsquelle 1 wirkt eine Störung oder mechanische Schwingung 2 mit Amplitude $a_0$ und Phase $\alpha$ auf eine Summationsstelle 3 , einer Messgröße entsprechend, ein. Das Signal 4 wird durch eine Messeinrichtung 5 aufgenommen, deren gemessenes Signal 6 nach Passage eines Filters 7 oder eines Korrelators 7 das Messsignal 8 mit Amplitude $C_0$ und Phase $\gamma$ bewirkt. Ohne Beschränkung der Allgemeinheit sei angenommen, dass die Messeinrichtung 5 eine Übertragungsfunktion von 1 aufweist. Hat sie eine Übertragungsfunktion ungleich 1, so kann die Störung auch als nach der Messeinrichtung 5 angreifend modelliert werden. Dieses Messsignal 8 dient als Eingabe einer Recheneinheit 9. Ausgabe der Recheneinheit 9 ist ein Steuersignal für die Stellgröße 10 mit Amplitude $b_0$ und Phase $\beta$, welche einem Aktuator 11 zugeführt wird. Das vom Aktuator 11 ausgehende Signal 12 bewirkt ein Moment, welches, durch den Prozess 13 beeinflusst, als harmonisches Moment 14 mit Amplitude $K_P b_0$ und Phase $\beta + \varphi_P$ zur Erzeugung einer Kompensation der Störung 2 an der Summationsstelle 3 dient. Das Moment ist im wesentlichen harmonisch.

Ausgangspunkt der Betrachtung von Figur 1 ist eine ohne Kompensation an der Kompensationswelle auftretende sinusförmige Störung $a(t)$, welche eine hier für die Betrachtung nicht entscheidende Ursache haben kann. Bei fester Frequenz hat sie die Form $a(t) = a_0 \sin(\omega_S t + \alpha)$, wobei $a_0$ die Amplitude der Störung und $\alpha$ ihre Phase bezeichnen. Im Fall einer festen Ordnung hat die Störung die Form $a(\varphi_M(t)) = a_0 \sin(r \varphi_M(t) + \alpha)$, wobei $\varphi_M(t)$ den Winkel der Kompensationswelle bezeichnet, welcher zeitabhängig ist, wobei t die Zeit bezeichnet. Die Ordnung der Störung ist durch r bezeichnet, mit anderen Worten das Verhältnis zwischen der Frequenz der Störung und der Umdrehungsfrequenz der Maschinenwelle.

Diese auf die Kompensationswelle wirkende Störung kann aus dem Messsignal eines Sensors an der Kompensationswelle berechnet werden. Dabei ist es unerheblich, welche konkrete Ausführungsform des Sensors gewählt wird, es ist nur erforderlich, dass der Sensor den Winkel, die Geschwindigkeit oder die Beschleunigung der Welle misst. Insbesondere sind auch ohnehin an der Welle zur Maschinenregelung eingesetzte Drehgeber zur Messung verwendbar. Basis zur Ausführung der Kompensation kann die Beschleunigung, die Geschwindigkeit oder der Winkel der Kompensationswelle sein. Sofern eins dieser Signale kompensiert ist, sind die anderen ebenfalls kompensiert. Vorzugsweise wird das Signal in Abhängigkeit vom Sensor gewählt. Bei Verwendung eines Drehgebers sind beispielsweise der Winkel oder die Geschwindigkeit vorteilhaft, da sie sich relativ störungsarm bestimmen lassen. Die Signale des Sensors sind durch Integration oder Differenziation gegebenenfalls entsprechend ineinander umzuwandeln.

Aus dem so gewonnenen Signal mit genauer Amplitude $c_0$ und Phase $\gamma$ können sodann Amplitude $b_0$ und Phase $\beta$ der harmonischen Schwingung zur Kompensation, also des im wesentlichen harmonische Momentes zur Kompensation, bestimmt werden. Dies ist sowohl im Frequenzbereich als auch im Zeitbereich möglich. Im Frequenzbereich kann beispielsweise durch eine Fast-Fourier-Transformation (FFT) über einen kurzen Zeitraum die Amplitude $c_0$ und die Phase $\gamma$ für die Kreisfrequenz $\omega_S$ direkt berechnet werden. In diesem einfachen Fall gilt $a_0 = c_0$ und $\alpha = \gamma$ . Im Zeitbereich kann durch ein schmalbandiges Bandpassfilter zunächst die harmonische Schwingung mit der Kreis-frequenz $\omega_S$ isoliert werden, wenn es sich bei der mechanischen Schwingung um eine allgemeine Schwingung mit einem bestimmten Frequenzspektrum handelt, und beispielsweise kann anhand der Nulldurchgänge des resultieren-den Signals die Phase $\gamma$ bestimmt werden. Die Amplitude $C_0$ kann zum Beispiel anhand der detektierten Maxima und Minima des harmonischen Schwingungssignals bestimmt werden oder durch Multiplikation des Mittelwertes der gleich-gerichteten Schwingung mit $\pi/2$.

Alternativ zur Filterung und anschließender Bestimmung von Amplitude und Phase der durch das Filter selektierten Schwingung an Hand der Extrema beziehungsweise der Nulldurchgänge kann die Bestimmung der Schwingungsparameter (Amplitude und Phase) auch mit einem Korrelationsverfahren, insbesondere mit einem orthogonalen Korrelationsverfahren erfolgen. Das orthogonale Korrelationsverfahren birgt diverse Vorteile, da beispielsweise mit der Korrelationsparameter $T_{korr}$ ein Parameter zur Verfügung steht, mit dem im kleinen Schritten, insbesondere in Vielfachen der Periodendauer, zwischen hoher Messgenauigkeit und kurzer Messzeit gewählt werden kann. Dies ermöglicht es, relativ große Schwingungen zunächst schnell durch Verwendung kleiner Korrelationsdauem zu reduzieren und anschließend bei größeren Korrelationsdauern zu eliminieren. Die Wirkung der orthogonalen Korrelation ist sehr ähnlich derjenigen des Messverfahrens mit geeignetem Bandpassfilter. Insbesondere nimmt die Dämpfung tendenziell mit zunehmendem Abstand einer Frequenz von der Messordnung bzw. Messfrequenz überproportional zu.

Ziel der Filterung mit Bandpassfilter ist es, die zu messende Frequenz sehr gering und alle anderen Frequenzen möglichst hoch zu dämpfen. Mit abnehmender Filterbandbreite wird dieses Ziel tendenziell besser erreicht, jedoch nimmt dabei die Einschwingzeit zu, die der Zeitdauer entspricht, ab welcher der Fehler des Filterausgangssignals nach einer Änderung der Schwingung am Filtereingang einen gewählten Wert, beispielsweise 1%, nicht mehr überschreitet. Dies ist prinzipbedingt, da Änderungen im Eingangssignal hohen Frequenzen entsprechen, welche durch die geringere Bandbreite stärker gedämpft werden. Die Einschwingzeit begrenzt die Zeitdauer vom Beginn der Messung bis zum ersten Kompensationsschritt nach unten und damit auch die minimale Abtastzeit einer Kompensationsregelung.

Sollen die Schwingungen möglichst rasch kompensiert werden, so sind deshalb entsprechend geringe Einschwingzeiten und damit größere Filterbandbreiten erforderlich. Dadurch sind noch andere Frequenzen im Ausgangssignal des Filters enthalten, welche die Bestimmung von Amplitude und Phase der Messfrequenz als Störung überlagern. Die Wirkung der Störung einer Frequenz auf eine Messfrequenz kann erheblich reduziert werden, indem eine Mittelwertbildung der Messwerte über eine näherungsweise ganze Anzahl von Periodendauern der Schwebungsfrequenz erfolgt. Die Mittelwertbildung darf dabei nicht auf die berechnete Amplitude und Phase der Messfrequenz, andern muss auf die komplexe Darstellung der Messfrequenzschwingung angewendet werden, also auf Realteil und Imaginärteil (die zueinander orthogonalen Anteile). Die gesamte benötigte Zeit für die Messung der Kompensationsfrequenz für ein Filter setzt sich aus der Einschwingzeit und der Schwebungsperiodendauer zusammen. In einer orthogonalen Korrelationsmessung kann diese Zeit kürzer als eine vergleichbar genaue Messung mit einem schmalbandigen Filter sein, da näherungsweise die Schwebungsperiodendauer der minimal erreichbaren Abtastzeit einer Kompensationsregelung entspricht.

Eine Mittelwertbildung über die bei einer dicht benachbarten Frequenz recht lange Schwebungszeit und sogar eine Korrelation kann bei Einsatz eines Filters entfallen, wenn die Störfrequenz ebenfalls gemessen wird und ihr Signalanteil durch Subtraktion des daraus berechneten durch sie verursachten Fehlerterms eliminiert wird. Diese Vorgehensweise ist auch auf mehrere Störungen anwendbar. Die wechselseitige Eliminierung von Rückwirkungen der Messfrequenz auf die Störfrequenzen ist ebenfalls möglich.

Allgemein ist zur erfindungsgemäßen Kompensation zu sagen, dass eine harmonische Schwingung beziehungsweise ein harmonisches Moment so einem Antriebsmoment überlagert wird, welches auf die Kompensationswelle einwirkt, dass $c_0 = 0$. Mit anderen Worten wird die Amplitude der Schwingung bei der Frequenz $\omega_S$ an der Welle eliminiert. Dieses ist dann der Fall, wenn für die Phase und die Amplitude der zur Kompensation eingesetzten Schwingung beziehungsweise des eingesetzten Momentes gilt $b_0 = a_0 / K_r$ und $\beta = \alpha - \varphi_P$. Dabei ist $K_P$ die Verstärkung und $\varphi_P$ die Phasenverschiebung des Prozesses von der Stellgröße, zum Beispiel dem Soll-Moment des Motors, bis zur Kompensationswelle, zum Beispiel mit der Geschwindigkeit als Basis der Kompensation, für die feste Frequenz $\omega_S$. Zu beachten ist, dass bei geregelten Maschinen $K_P$ und $\varphi_P$ auch abhängig von Struktur und Parametern des Reglers sind, da der Prozess bei geschlossenem Regelkreis relevant ist .

Die Frequenz $\omega_S$ des im Wesentlichen harmonischen Momentes, welches zur Kompensation eingesetzt wird, kann in Abhängigkeit von der Eigenfrequenz der Maschine oder von der Geschwindigkeit der Maschine bestimmt werden. Dabei kann die Frequenz des im Wesentlichen harmonischen Momentes in einem festen Verhältnis zu einer Eigenfrequenz der Maschine stehen, insbesondere das Verhältnis 1 oder ein ganzzahliges Vielfaches davon, aufweisen.

Die Phase $\alpha$ der Störung von der Form $a=a_0\sin(\varphi_{Ref}+\alpha)$, die Phase $\beta$ des Kompensationssignals von der Form $b=b_0 \sin(\varphi_{Ref}+\beta)$ und die Phase $\gamma$ des Messsignals von der Form $c=c_0 \sin(\varphi_{Ref}+\gamma)$ beziehen sich auf ein Referenzwinkelsignal von der Form $\sin(\varphi_{Ref})$ gleicher Frequenz. Zur Kompensation einer festen Frequenz kann nach dem erfindungsgemäßen Verfahren der Referenzwinkel als $\varphi_{Ref} = \omega_s t$ berechnet werden, zur Kompensation einer festen Ordnung als $\varphi_{Ref} = r\varphi_M$ aus dem Winkel $\varphi_M$ der Kompensationsachse. Zur Kompensation ganzer Ordnungen r = 1, 2, ... ist es dazu ausreichend, den Winkel $\varphi_M$ in einem Wertebereich einer Umdrehung zu erfassen, beispielsweise $\varphi_{Ref} \in \{0...2\pi\}$. Zur Kompensation nichtganzzahliger Ordnungen muss ein Winkelbereich über mehr als eine Umdrehung unterschieden werden. Zur Kompensation rationaler Ordnungen q = n/m, wobei n und m natürliche Zahlen sind, reicht die Unterscheidung eines Winkelbereichs von m Umdrehungen aus, beispielsweise $\varphi_{Ref} \in \{0...2m\pi\}$. Alternativ zur Berechnung des Referenzwinkels $\varphi_{Ref}$ aus dem Winkel der Kompensationsachse ist nach dem erfindungsgemäßen Verfahren oft auch eine direkte Erfassung des Referenzwinkels möglich, beispielsweise an einer die Störung verursachenden Achse.

In einer vorteilhaften Ausführungsform des erfindungsgemäßen Verfahrens werden die Kompensationsparameter $b_0$ und $\beta$ je nach Geschwindigkeit der Kompensationswelle derart fest eingestellt, dass an der Kompensationswelle die Störung möglichst gut kompensiert wird. Das heißt, die gemessene Amplitude $c_0$ in Zusammenwirkung der Störung und der vermittels des Prozesses an die Maschinenwelle übertragenen Kompensation möglichst klein wird. Dies kann im einfachsten Fall durch systematisches Probieren erfolgen, jedoch auch automatisiert sein, wie es beispielsweise durch das unten beschriebene Identifikationsverfahren ermöglicht wird. Die bevorzugten Werte können für verschiedene Maschinengeschwindigkeiten ermittelt und beispielsweise in einer Tabelle abgelegt werden. Für Geschwindigkeiten, welche nicht in der Tabelle enthalten sind, können die Parameter beim Betrieb aus den Tabellenwerten für die nächst größere und nächst kleinere Geschwindigkeit anhand eines geeigneten Verfahrens, beispielsweise linear oder durch Splines, interpoliert werden. Ein besonderer Vorteil dieser Ausführungsform ist, dass bei Betrieb der Maschine keine Messung der Störung mehr erforderlich ist und aufwendige Berechnungen entfallen, sodass das erfindungsgemäße Verfahren mit einfachen Mitteln realisiert werden kann und sogar in vorhandene Regler integrierbar ist. Es ist jedoch zu erwähnen, dass diese Ausführungsform insbesondere bei stationären Störungen sowie stationären Prozessen mit gewünschtem Erfolg anwendbar ist. Mit anderen Worten, die Änderungen von Amplitude $a_0$ oder Phase $\alpha$ der Störung sowie der Verstärkung $K_P$ oder Phasenverschiebung $\varphi_P$ des Prozesses im Zeitablauf führen zu einer unvollkommenen Kompensation. Ändern sich Störungen und Prozess nur geringfügig, können jedoch auch bei unvollkommener Kompensation Störungen weitgehend reduziert werden.

In einer vorteilhaften Weiterbildung des erfindungsgemäßen Verfahrens werden bei Betrieb der Maschine zunächst ohne Kompensation die Amplitude $c_0$ und die Phase $\gamma$ der Störung in der Messung bestimmt, um daraus die optimalen Kompensationsparameter $b_0 = c_0/K_G$ und $\beta = \gamma - \varphi_G$ zu berechnen. Mit diesen Kompensationsparametern wird schließlich die Kompensation ausgeführt. Zur Berechnung der Kompensationsparameter sind die Konstanten $K_G = K_P K_F$ und $\varphi_G = \varphi_P + \varphi_F$ erforderlich. Dabei sind $K_P$ und $K_F$ die Verstärkung und $\varphi_P$ und $\varphi_F$ die Phasenverschiebungen von Prozess bzw. Filter bei Kreisfrequenz $\omega_S$. Diese können beispielsweise aus der durch Modellbildung gewonnen Übertragungsfunktion der geregelten Maschine bei Kreisfrequenz $\omega_S$ gewonnen werden. $K_G$ und $\varphi_G$ können auch in einem Probelauf bestimmt werden. Dazu können beispielsweise aus der Messung von Amplitude $c_0$ und Phase $\gamma$ ohne Kompensation sowie den im Probelauf ermittelten Kompensationsparametern $b_0$ und $\beta$ bei optimaler Kompensation die Parameter als $K_G = c_0 / b_0$ und $\varphi_G = \gamma - \beta$ direkt berechnet werden. Alternativ dazu ist auch die unten beschriebene Identifikation von $K_G$ und $\varphi_G$ in einem Probelauf möglich. Ein Vorteil dieser Ausführungsform des erfindungsgemäßen Verfahren ist, dass keine Annahmen über Amplitude $a_0$ und Phase $\alpha$ der Störung erforderlich sind. Insbesondere Störungen, welche sich im Zeitverlauf sehr langsam ändern, können damit kompensiert werden. Auch falls die Phase der Störung $\alpha$ beim Einschalten der Maschine unbekannt ist, weil die Störung durch beispielsweise eine Welle verursacht wird, welche kein ganzzahliges Umdrehungsverhältnis zur Kompensationswelle aufweist und deren Winkel nicht gemessen wird, kann mit dieser vorteilhaften Ausführungsform eine Kompensation erreicht werden. In einer optimalen Kompensationsregelung kann erreicht werden, dass nur eine Messung und ein Regelungsschritt zur im wesentlichen vollständigen Kompensation erforderlich sind.

In einer weiteren vorteilhaften Ausführungsform der Erfindung ist eine Kompensationsregelung realisiert, welche aus den Parametern der aktuell ausgeführten Kompensation mit $b_0$ und $\beta$ und der bei dieser Kompensation an der Kompensationswelle verbliebenen Störung mit gemessener Amplitude $c_0$ und gemessener Phase $\gamma$ aktualisierte optimale Kompensationsparameter zur vollständigen Kompensation der Störung berechnet und mit diesen die Kompensation ausführt.

Nach jeder Änderung der Kompensationsparameter $b_0$ und $\beta$ benötigen Prozess und Filter eine bestimmte Zeit, um auf diese Änderung zu reagieren. Die Zeit, bis zu der sich ein neues Gleichgewicht einstellt, kann beispielsweise mehrere Sekunden betragen. Die Abtastzeit der Kompensationsregelung, mit anderen Worten die Zeitspanne zwischen zwei Regelungsschritten, sollte deshalb mindestens der Reaktionszeit auf Stellgrößenänderungen entsprechen. Ist seit einem ersten Regelungsschritt eine Kompensation mit Amplitude $b_{01}$ und Phase $\beta_1$ aktiv, so wird in einem zweiten Regelungsschritt zunächst Amplitude $c_{02}$ und Phase $\gamma_2$ der verbliebenen Störung an der Kompensationswelle gemessen und aus $b_{01}$, $\beta_1$, $c_{02}$ und $\gamma_2$ sowie den Konstanten $K_G = K_P K_F$ und $\varphi_G = \varphi_P + \varphi_F$ die Amplitude $b_{02}$ und Phase $\beta_2$ der Kompensation berechnet. Danach wird die Kompensation mit den Parametern $b_{02}$ und $\beta_2$ bis zum nächsten Regelungsschritt ausgeführt. Die neuen Kompensationsparameter können beispielsweise mit den Hilfsgrößen

$$c_{G2} = c_2/K_G$$

$$\gamma_{G2} = \gamma_2 - \varphi_G$$

$$Z = c_{G2}\sin(\gamma_{G2}) + b_1\sin(\beta_1)$$

$$N = c_{G2}\cos(\gamma_{G2}) + b_1\cos(\beta_1)$$

folgendermaßen berechnet werden:

$$b_{02} = \sqrt{c_{G2}^2 + b_{01}^2 + 2c_{G2}b_{01}\cos(\gamma_{G2}-\beta_1)}$$

$$\beta_2 = \begin{cases} \arctan(Z/N) & \textit{für} & N > 0 \\ \arctan(Z/N) + \pi & \textit{für} & N < 0 \\ \pi/2 & \textit{für} & N = 0 \wedge Z \geq 0 \\ -\pi/2 & \textit{für} & N = 0 \wedge Z < 0 \end{cases}$$

Für den Fachmann ist klar, dass diese Vorgehensweise zwischen einem ersten und einem zweiten Regelungsschritt in einfacher Analogie auf die Vorgehensweise zwischen einem (k-1)-ten und einem k-ten Regelungsschritt, wobei k eine natürliche Zahl ist, verallgemeinert werden kann.

Die Berechnung dieser Größen kann als Vektoraddition in einer komplexen Darstellung interpretiert werden. Der Betrag des die Schwingung repräsentierenden Vektors entspricht der Amplitude, und seine Orientierung stellt die Phase der Schwingung dar. Der Vektor, der neuen Kompensation entspricht der Summe aus dem Vektor der letzten Kompensation und dem Vektor der bei dieser Kompensation gemessenen Störung bezogen auf den Prozesseingang. Weil der resultierende Vektor jeden Winkel zwischen 0 und $2\pi$ einnehmen kann, ist eine Fallunterscheidung für $\beta_2$ entsprechend den vier Quadranten des Koordinatensystems notwendig. Die Darstellung hier, insbesondere mit Amplituden und Phasen, wurde vor allem aufgrund ihrer großen Anschaulichkeit zur Darstellung des erfindungsgemäßen Verfahrens gewählt. Es ist auch möglich und für den Fachmann schnell ersichtlich, dass auch Darstellungen für $\beta_2$ ohne Fallunterscheidung benutzt werden können.

Eine konsequente Verwendung komplexer Notation für die beteiligten Störungen, Prozessparameter und Kompensationsparameter kann zu einer einfachen und äquivalenten Darstellung derselben Zusammenhänge führen. In dieser Notation wird in der Folge von komplexen Amplituden der Störung a*, Messung c* und Kompensation b* mit den komplexen Verstärkungen des Filters $G_F$* und des Prozesses $B_P$* gesprochen. Die komplexen Amplituden sind die Repräsentation der aus den Schwingungsparametern Amplitude und Winkel gebildeten komplexen Zahlen. Die komplexen Verstärkungen sind die komplexen Werte der Übertragungsfunktionen an der betrachteten Schwingungsfrequenz.

Die komplexen Verstärkungen von Prozess und Filter lassen sich zusammenfassen als $G_G^* = G_P^* G_F^*$. Im k-ten Abtastschritt gilt $c_k^* = a_k^* G_F^* - b_{k-1}^* G_G^*$ und im (k+1)-ten Abtastschritt $c_{k+1}^* = a_{k+1}^* G_F^* - b_k^* G_G^*$. Ist die Störung in beiden Abtastschritten gleich, d.h. $a_k^* = a_{k+1}^*$, so folgt aus der Forderung der vollständigen Kompensation ($c_{k+1}^* = 0$) direkt die Gleichung der Kompensationsregelung

$$b_k^* = \frac{c_k^*}{G_G^*} + b_{k-1}^*$$

In einem k-ten Regelungsschritt kann zunächst aus mit dem Filterverfahren gemessenen Schwingungsparametern $c_0$ und $\gamma$ die komplexe Amplitude der Schwingung berechnet werden gemäß

$$c_k^* = c_0 \cdot e^{jr}$$

oder aus der orthogonalen Korrelationsverfahren gemäß

$$c_k^* = c_x + j \cdot c_y$$

Hierbei bezeichnet j die imaginäre Einheit mit $j^2 = -1$. Danach kann die komplexe Amplitude der $b_k^*$ des Kompensationssignals berechnet werden. Anschließend können die Kompensationsparameter $b_0$ und $\beta$ aus der komplexen Amplitude b* des Kompensationssignals durch Betragsbildung $b_0 = |b^*|$ und Phasenbestimmung $\beta = \mathrm{aretan}(b^*)$ gewonnen werden, wobei arctan hier der Hauptwert des Arguments von b* ist, also der Winkel im Bereich $-180° < \beta \leq 180°$, zwischen der positiven Richtung der reellen Achse und dem Ortsvektor $\overline{0b^*} = (\mathrm{Re}\{b^*\}, \mathrm{Im}\{b^*\})$.

Im (k-1)-ten Abtastschritt gilt

$$c_{k-1}^* = a_{k-1}^* G_F^* - b_{k-2}^* G_G^* .$$

Ist die Störung in zwei aufeinanderfolgenden Abtastschritten gleich, d.h. $a^*_{k-1} = a^*_k$, so folgt

$$G^*_G = \frac{c^*_k - c^*_{k-1}}{b^*_{k-2} - b^*_{k-1}}$$

Diese Gleichung eignet sich direkt zum Berechnen der für die Regelung benötigten komplexen Gesamtverstärkung $G^*_G$.

Besonders vorteilhaft ist bei dieser Ausführmngsform des erfindungsgemäßen Verfahrens, dass die Kompensation als geschlossener Regelkreis ausgeführt ist. Damit ist es möglich auch instationäre Störungen, mit anderen Worten solche mit veränderlicher Amplitude und Phase, gut zu kompensieren, sofern die Änderungen im Vergleich zur Abtastzeit der Kompensationsregelung hinreichend langsam erfolgen. Des Weiteren wird durch die Rückführung im Regelkreis bewirkt, dass auch bei nicht genau bekannten Konstanten $K_G$ und $\varphi_G$ eine relativ gute Kompensation möglich ist, da das Verfahren der Kompensationsregelung unter der Bedingung

$$2\cos(\varphi_{GT} - \varphi_G) \geq K_G / K_{GT} \geq 0$$

unter Vernachlässigung von Messfehlern für die stationäre Störung und den stationären Prozess konvergiert. Dabei sind $K_{GT}$ und $\varphi_{GT}$ die tatsächlichen und $K_G$ und $\varphi_G$ die bei der Kompensationsregelung zur Berechnung der Kompensation verwendeten Prozessparameter. Dieser Fall ist etwa bei geringen Schwankungen der Verstärkung $K_P$ und der Phasenverschiebung $\varphi_P$ des Prozesses während des Betriebes gegeben.

In einer vorteilhaften Weiterbildung der Erfindung umfasst das erfindungsgemäße Verfahren eine optimale Kompensationsregelung, in der zur Sicherstellung der Optimalität benötigte Prozessparameter $K_G = K_P K_F$ und $\varphi_G = \varphi_P + \varphi_F$ am Beginn und/oder während der Kompensationsregelung identifiziert werden.

Zur Identifikation sind mindestens zwei Messungen der resultierenden Störungen an der Kompensationswelle zu verschiedenen Zeitpunkten mit unterschiedlichen Kompensationsparametern erforderlich. Bei Verwendung jeweils zweier Messungen bei der Identifikation werden zu einem ersten Zeitpunkt t, mit wirksamen Kompensationsparametern $b_{00}$ und $\beta_0$ die Parameter $c_{01}$ und $y_1$ gemessen und zu einem zweiten Zeitpunkt $t_2$ mit wirksamen Kompensationsparametern $b_{01}$ und $\beta_1$ die Parameter $c_{02}$ und $\gamma_2$ gemessen. Mit folgender Berechnungsvorschrift können beispielsweise aus diesen acht Werten zum zweiten Zeitpunkt $t_2$ direkt die Verstärkung $K_{G2}$ und die Phasenverschiebung $\varphi_{G2}$ berechnet werden:

$$c = \sqrt{c^2_{01} + c^2_{02} - 2c_{01}c_{02}\cos(\gamma_2 - \gamma_1)}$$

$$Z_c = -c_{01}\sin(\gamma_1) + c_{02}\sin(\gamma_2)$$

$$N_C = -c_{01}\cos(\gamma_1) + c_{02}\cos(\gamma_2)$$

$$\gamma = \begin{cases} \arctan(Z_c / N_c) & \text{für} & N_c > 0 \\ \arctan(Z_c / N_c) + \pi & \text{für} & N_c < 0 \\ \pi / 2 & \text{für} & N_c = 0 \wedge Z_c \geq 0 \\ -\pi / 2 & \text{für} & N_c = 0 \wedge Z_c < 0 \end{cases}$$

$$b = \sqrt{b^2_{00} + b^2_{01} - 2b_{00}b_{01}\cos(\beta_1 - \beta_0)}$$

$$Z_b = b_{00}\sin(\beta_0) - b_{01}\sin(\beta_1)$$

$$N_b = b_{00} \cos(\beta_0) - b_{01} \cos(\beta_1)$$

$$\beta = \begin{cases} \arctan(Z_b / N_b) & \text{für} & N_b > 0 \\ \arctan(Z_b / N_b) + \pi & \text{für} & N_b < 0 \\ \pi / 2 & \text{für} & N_b = 0 \wedge Z_b \geq 0 \\ -\pi / 2 & \text{für} & N_b = 0 \wedge Z_b < 0 \end{cases}$$

$$K_{G2} = c/b$$

$$\varphi_{G2} = \gamma - \beta$$

Während einer Kompensationsregelung können damit in jedem der Regelungsschritte zu Zeitpunkten $t_i$, wobei i eine natürliche Zahl ist und die i Zeitpunkte abzählt, aktualisierte Prozessparameter $K_{Gi}$ und $\varphi_{Gi}$ berechnet werden, welche eine Grundlage der weiteren Regelung bilden. Dabei ist es unerheblich, ob die Zeiträume zwischen den einzelnen Messungen gleich verteilt oder gehäuft sind. Eine Identifikation aus nur zwei Messungen ist unter drei Voraussetzungen möglich: Erstens sollen sich die Prozessparameter zwischen den beiden Messungen nicht geändert haben. Da das Filter und die Maschinenregelung zwischen zwei Regelungsschritten im Wesentlichen unverändert bleiben, können Änderungen der Prozessparameter nur durch Änderungen in der Maschinendynamik hervorgerufen werden. Da diese Änderungen oft sehr langsam erfolgen, ist diese Forderung im Wesentlichen erfüllt. Zweitens sollte die Störung im Wesentlichen zwischen beiden Messungen sich nicht wesentlich geändert haben. Die Änderungsgeschwindigkeit von Phase und Amplitude der Störung hängt von ihrer Ursache ab. Allgemein gültige Aussagen dazu sind nicht möglich. In diesem Sinne ist es erforderlich, Messungen zu den Zeitpunkten $t_i$ aufzunehmen, wobei angemessene Zeitabschnitte zwischen den einzelnen konsekutiven Messungen liegen. Vielen Störungen haben konstruktiv bedingte Ursachen, wie beispielsweise Unwuchten, Kurvenscheiben oder dergleichen. Derartige Störungen sind im Wesentlichen stationär. Drittens sollte die Messung nicht durch weitere stochastische Störungen beeinflusst sein. Die Identifikation im erfindungsgemäßen Verfahren wird im Wesentlichen von stochastischen Störungen nicht beeinflusst, da die Messungen sich nur auf eine bestimmte Frequenz konzentrieren. Handelt es sich bei den stochastischen Störungen etwa um weißes Rauschen, so wirkt sich von der gesamten Energie der Störung nur ein geringer Anteil bei der bestimmten, gerade gemessenen Frequenz $\omega_S$ aus, da nur diese nicht ausgefiltert wird. Da verschiedenen Zeitpunkten $t_i$ Messungen vorgenommen werden, ist das erfindungsgemäße Verfahren im Wesentlichen weniger empfindlich gegen stochastische, zeitlich begrenzte störende Einflüsse.

Wie bereits erwähnt, kann alternativ zur Bestimmung der Schwingungsparameter aus Nulldurchgängen und Extrema ist die Berechnung mittels orthogonaler Korrelation durchgeführt werden. Die Parameter einer Schwingung mit komplexer Amplitude lassen sich auch durch ein auf Korrelationsrechnung basierenden Verfahren ermitteln.

Um den Realteil $c_{x1}$ und Imaginärteil $c_{y1}$ der komplexen Amplitude einer Schwingung $c(\varphi) = c_{x1} \sin(r_1 \cdot \varphi) + c_{yl} \cos(r_1 \cdot \varphi)$ zu bestimmen, wird die Kreuzkorrelierte des Messsignals zu dem Referenzwinkelsignal zu den Winkeln $0°$ und $90°$ berechnet. Für den mit der orthogonalen Korrelation erhaltenen Schätzwert des Realteils der Schwingung gilt bei Korrelation über ein ganzzahliges Vielfaches halber Schwingungsperioden, also von $\varphi_0$ bis $\varphi_1 = \varphi_0 + n\pi/r_1$

$$\hat{c}_{x1} = \frac{2}{\varphi_1 - \varphi_0} \int_{\varphi_0}^{\varphi_1} c(r_1\varphi) \sin(r_1\varphi) d\varphi = \frac{2}{\varphi_1 - \varphi_0} \int_{\varphi_0}^{\varphi_1} (c_{x1} \sin(r_1\varphi) + c_{y1} \cos(r_1\varphi)) \sin(r_1\varphi) d\varphi$$

$$= c_{x1}\left(1 - \frac{\sin(2r_1\varphi_1) - \sin(2r_1\varphi_0)}{2r_1(\varphi_1 - \varphi_0)}\right) + c_{y1} \frac{\cos(2r_1\varphi_0) - \cos(2r_1\varphi_1)}{2r_1(\varphi_1 - \varphi_0)} = c_{x1}$$

Für den Schätzwert des Imaginärteils gilt entsprechend

$$\hat{c}_{y1} = \frac{2}{\varphi_1 - \varphi_0} \int_{\varphi_0}^{\varphi_1} c(r_1\varphi)\cos(r_1\varphi)d\varphi = \frac{2}{\varphi_1 - \varphi_0} \int_{\varphi_0}^{\varphi_1} (c_{x1}\sin(r_1\varphi) + c_{y1}\cos(r_1\varphi))\cos(r_1\varphi)d\varphi$$

$$= c_{x1}\frac{\cos(2r_1\varphi_0) - \cos(2r_1\varphi_1)}{2r_1(\varphi_1 - \varphi_0)} + c_{y1}\left(1 + \frac{\sin(2r_1\varphi_1) - \sin(2r_1\varphi_0)}{2r_1(\varphi_1 - \varphi_0)}\right) = c_{y1}$$

Bei zeitdiskreten Systemen lauten die Berechnungsgleichungen dann

$$\hat{c}_{x1} = \frac{2}{\varphi(k_1) - \varphi(k_0)} \sum_{k=k_0+1}^{k_1} c(k)\sin(r_1\varphi(k))(\varphi(k) - \varphi(k-1))$$

und

$$\hat{c}_{y1} = \frac{2}{\varphi(k_1) - \varphi(k_0)} \sum_{k=k_0+1}^{k_1} c(k)\cos(r_1\varphi(k))(\varphi(k) - \varphi(k-1))$$

Dabei ist $\varphi(k)$ der Winkel und $c(k)$ das Kompensationssignal zum Abtastschritt k und es gilt

$$\varphi(k_1) \approx \varphi(k_0) + \frac{n\pi}{r_1}$$

Falls der Differenzwinkel $\varphi(k) - \varphi(k-1)$ konstant bleibt oder als Näherung kann auch

$$\hat{c}_{x1} = \frac{2}{k_1 - k_0} \sum_{k=k_0+1}^{k_1} c(k)\sin(r_1\varphi(k))$$

und

$$\hat{c}_{y1} = \frac{2}{k_1 - k_0} \sum_{k=k_0+1}^{k_1} c(k)\cos(r_1\varphi(k))$$

verwendet werden. Da $\varphi_{Ref}(k) = r_1\varphi(k)$ für die Kompensation ohnehin berechnet wird, ist dabei für die Korrelation in jedem Abtastschritt nur die Berechnung von zwei Winkelfunktionen und zwei Multiplikationen erforderlich, so dass der Rechenaufwand relativ gering ist.

Sind weitere Ordnungen im Kompensationssignal enthalten, so entstehen bei der Berechnung der Korrelation systematische Fehler, die abgeschätzt werden können. Ist neben der Kompensationsordnung $r_1$ eine weitere Ordnung $r_2$ im Kompensationssignal enthalten, hat das Kompensationssignal die Form

$$c(\varphi) = c_{x1}\sin(r_1 \cdot \varphi) + c_{y1}\cos(r_1 \cdot \varphi) + c_{x2}\sin(r_2 \cdot \varphi) + c_{y2}\cos(r_2 \cdot \varphi)$$

Für den mit der orthogonalen Korrelation erhaltenen Schätzwert des Realteils der Schwingung gilt bei Integration über

$\varphi_0$ bis $\varphi_1 = \varphi_0 + n\pi/r_1$

$$\hat{c}_{x1} = \frac{2}{\varphi_1 - \varphi_0} \int_{\varphi_0}^{\varphi_1} c(r_1\varphi) \sin(r_1\varphi) d\varphi = c_{x1} + \frac{2}{\varphi_1 - \varphi_0} \int_{\varphi_0}^{\varphi_1} (c_{x2} \sin(r_2 \cdot \varphi) + c_{y2} \cos(r_2 \cdot \varphi)) \sin(r_1\varphi) d\varphi$$

$$= c_{x1} + \left( c_{x2} \frac{\sin((r_1 - r_2)\varphi_1) - \sin((r_1 - r_2)\varphi_0)}{(r_1 - r_2)(\varphi_1 - \varphi_0)} + c_{y2} \frac{\cos((r_1 - r_2)\varphi_0) - \cos((r_1 - r_2)\varphi_1)}{(r_1 - r_2)(\varphi_1 - \varphi_0)} \right)$$

$$+ \left( c_{x2} \frac{\sin((r_1 + r_2)\varphi_0) - \sin((r_1 + r_2)\varphi_1)}{(r_1 + r_2)(\varphi_1 - \varphi_0)} + c_{y2} \frac{\cos((r_1 + r_2)\varphi_0) - \cos((r_1 + r_2)\varphi_1)}{(r_1 + r_2)(\varphi_1 - \varphi_0)} \right)$$

Entsprechend gilt für den mit der orthogonalen Korrelation erhaltenen Schätzwert des Imaginärteils der Schwingung bei Integration über $\varphi_0$ bis $\varphi_1 = \varphi_0 + n\pi/r_1$

$$\hat{c}_{y1} = \frac{2}{\varphi_1 - \varphi_0} \int_{\varphi_0}^{\varphi_1} c(r_1\varphi) \cos(r_1\varphi) d\varphi = c_{y1} + \frac{2}{\varphi_1 - \varphi_0} \int_{\varphi_0}^{\varphi_1} (c_{x2} \sin(r_2 \cdot \varphi) + c_{y2} \cos(r_2 \cdot \varphi)) \cos(r_1\varphi) d\varphi$$

$$= c_{y1} + \left( c_{x2} \frac{\cos((r_1 - r_2)\varphi_1) - \cos((r_1 - r_2)\varphi_0)}{(r_1 - r_2)(\varphi_1 - \varphi_0)} + c_{y2} \frac{\sin((r_1 - r_2)\varphi_1) - \sin((r_1 - r_2)\varphi_0)}{(r_1 - r_2)(\varphi_1 - \varphi_0)} \right)$$

$$+ \left( c_{x2} \frac{\cos((r_1 + r_2)\varphi_0) - \cos((r_1 + r_2)\varphi_1)}{(r_1 + r_2)(\varphi_1 - \varphi_0)} + c_{y2} \frac{\sin((r_1 + r_2)\varphi_1) - \sin((r_1 + r_2)\varphi_0)}{(r_1 + r_2)(\varphi_1 - \varphi_0)} \right)$$

Im Nenner der Brüche im jeweils ersten Klammerausdruck ist der Faktor $(r_1 - r_2)$ enthalten. Deren Beitrag zum Fehler ist deshalb besonders für Ordnungen $r_2$ groß, die nah bei der Kompensationsordnung r, liegen. Um die Qualität der Messwerte zu verbessern, ist es sinnvoll diesen Fehler möglichst weitgehend zu reduzieren. Im folgenden werden dafür verschiedene Verfahren vorgestellt, die einzeln oder in Kombination miteinander angewendet werden können.

Wird die Korrelation über Winkel von $\varphi_0$ bis $\varphi_1 = \varphi_0 + \frac{2n\pi}{(r_1 - r_2)}$, d.h. Vielfache der Schwebungsperiode ausgeführt, so resultiert der erste Klammerausdruck zu 0. Eine Möglichkeit, den Fehler weitgehend zu reduzieren, ist es deshalb als Korrelationsdauer nur Vielfache der halben Schwingungsperiode zu wählen, die möglichst nah an Vielfachen der Schwebungsperiode liegen.

Eine weitere Möglichkeit ist es, die störenden Fehlerterme

$$e_{1x} = \frac{\sin((r_1 - r_2)\varphi_1) - \sin((r_1 - r_2)\varphi_0)}{(r_1 - r_2)(\varphi_1 - \varphi_0)}$$

$$e_{1y} = \frac{\cos((r_1 - r_2)\varphi_0) - \cos((r_1 - r_2)\varphi_1)}{(r_1 - r_2)(\varphi_1 - \varphi_0)}$$

zu berechnen und nach den Gleichungen

$$\hat{\hat{c}}_{x1} = \hat{c}_{x1} - c_{x2} \cdot e_{1x} - c_{y2} \cdot e_{1y}$$

$$\hat{\hat{c}}_{y1} = \hat{c}_{y1} + c_{x2} \cdot e_{1y} - c_{y2} \cdot e_{1x}$$

die Fehler aus den mit der Korrelation berechneten Schätzwerten $\hat{c}_{x1}$ und $\hat{c}_{y1}$ der Schwingung zu subtrahieren. Die benötigten Parameter $c_{x2}$ und $c_{y2}$ der Ordnung $r_2$ können dazu ebenfalls mit dem Korrelationsverfahren geschätzt werden. Auch die Rückwirkung der Ordnung $r_1$ auf die Ordnung $r_2$ kann auf diese Weise eliminiert werden. Iterativ lassen sich so wechselseitig Störungen eliminieren.

Eine weitere Möglichkeit ist es, das Gleichungssystem

$$\begin{bmatrix} \hat{c}_{x1} \\ \hat{c}_{y1} \\ \hat{c}_{x2} \\ \hat{c}_{y2} \end{bmatrix} = \begin{bmatrix} 1 & 0 & e_{1x} & e_{1y} \\ 0 & 1 & -e_{1y} & e_{1x} \\ e_{2x} & e_{2y} & 1 & 0 \\ -e_{2y} & e_{2x} & 0 & 1 \end{bmatrix} \cdot \begin{bmatrix} \hat{\hat{c}}_{x1} \\ \hat{\hat{c}}_{y1} \\ \hat{\hat{c}}_{x2} \\ \hat{\hat{c}}_{y2} \end{bmatrix}$$

mit

$$e_{1x} = \frac{\sin((r_1 - r_2)\varphi_{11}) - \sin((r_1 - r_2)\varphi_{01})}{(r_1 - r_2)(\varphi_{11} - \varphi_{01})}$$

$$e_{1y} = \frac{\cos((r_1 - r_2)\varphi_{01}) - \cos((r_1 \, r_2)\varphi_{11})}{(r_1 - r_2)(\varphi_{11} - \varphi_{01})}$$

$$e_{2x} = \frac{\sin((r_1 - r_2)\varphi_{12}) - \sin((r_1 - r_2)\varphi_{02})}{(r_1 - r_2)(\varphi_{12} - \varphi_{02})}$$

$$e_{1y} = \frac{\cos((r_1 - r_2)\varphi_{02}) - \cos((r_1 - r_2)\varphi_{12})}{(r_1 - r_2)(\varphi_{12} - \varphi_{02})}$$

zu lösen, woraus folgt

$$\begin{bmatrix} \hat{\hat{c}}_{x1} \\ \hat{\hat{c}}_{y1} \\ \hat{\hat{c}}_{x2} \\ \hat{\hat{c}}_{y2} \end{bmatrix} = \frac{1}{\det K} \begin{bmatrix} A_{11} & A_{21} & A_{31} & A_{41} \\ -A_{21} & A_{11} & -A_{41} & A_{31} \\ A_{13} & A_{23} & A_{11} & A_{21} \\ -A_{23} & A_{13} & -A_{21} & A_{11} \end{bmatrix} \cdot \begin{bmatrix} \hat{c}_{x1} \\ \hat{c}_{y1} \\ \hat{c}_{x2} \\ \hat{c}_{y2} \end{bmatrix}$$

mit Adjunkten und Determinante

$$A_{11} = 1 - e_{1x}e_{2x} + e_{1y}e_{2y}$$

$$A_{21} = e_{1x}e_{2y} + e_{2x}e_{1y}$$

$$A_{31} = (e_{1x}^2 + e_{1y}^2)e_{2x} - e_{1x}$$

$$A_{41} = -(e_{1x}^2 + e_{1y}^2)e_{2y} - e_{1y}$$

$$A_{13} = (e_{2x}^2 + e_{2y}^2)e_{1x} - e_{2x}$$

$$A_{23} = -(e_{2x}^2 + e_{2y}^2)e_{1y} - e_{2y}$$

$$\det K = 1 - 2e_{1x}e_{2x} + 2e_{1y}e_{2y} + (e_{1x}^2 + e_{1y}^2)(e_{2x}^2 + e_{2y}^2)$$

Sind die Korrelationswinkel $\varphi_{01}$ und $\varphi_{11}$ der Ordnung $r_1$ und die Korrelationswinkel $\varphi_{02}$ und $\varphi_{12}$ der Ordnung $r_2$ gleich, so vereinfachen sich die Berechnungen erheblich, da dann gilt $e_{2x} = e_{1x}$ und $e_{2y} = -e_{1y}$ und die resultierende symmetrische Matrix leichter invertierbar ist.

Besonders vorteilhaft bei der Identifikation der Kompensationsparameter im erfindungsgemäßen Verfahren ist, dass keine Annahmen zur Dynamik des Prozesses, wie beispielsweise der Anzahl der Pole und Nullstellen der Prozessübertragungsfunktion, erforderlich sind. Stattdessen werden Verstärkung und Phasenverschiebung für eine bestimmte Frequenz des Prozesses für die Kompensation benötigt und auch identifiziert.

In einer vorteilhaften Weiterbildung der Erfindung können die Prozessparameter statt aus nur zwei Messungen auch mit statistischen Methoden, beispielsweise einer gleitenden Mittelwertbildung aus einer größeren Anzahl von Messungen oder dergleichen, berechnet werden. Um den durch zeitliche Änderungen von Prozessparametern und vor allem von Störungen auftretenden Identifikationsfehler, also die Abweichung zwischen den berechneten und den tatsächlichen Kompensationsparametern, möglichst gering zu halten, können dabei jeweils aus zwei zeitlich aufeinander folgenden Messungen zunächst die Prozessparameter $K_{Gi}$ und $\varphi_{Gi}$ wie oben angegeben berechnet werden und aus den so ermittelten Werten zu verschiedenen Zeitpunkten mit statistischen Methoden endgültige Prozessparameter $K_{Gi}{}^*$ und $\varphi_{Gi}{}^*$ berechnet werden.

Je weniger sich die verwendeten Kompensationsparameter bei beiden Messungen unterscheiden, desto geringer ist auch die Qualität der Identifikation. Wurden die Prozessparameter relativ gut berechnet, so kann eine mit diesen Parametern arbeitende Kompensationsregelung die Störung weitgehend eliminieren. Bei stationärer Störung und stationärem Prozess führt dies zu etwa gleichbleibenden Kompensationsparametern $b_0$ und $\beta$. Dieses Problem ist typisch für adaptive Regelungen. Man kann dies durch eine Überwachung lösen, welche die Identifikation bei zu geringen Unterschieden der bei den Messungen wirksamen Kompensationsparametern ausschaltet. In diesem Fall sind die Prozessparameter ohnehin bekannt, und es bedarf keiner weiteren Berechnung.

Die oben angegebene Berechnungsvorschrift des erfindungsgemäßen Verfahrens schließt insbesondere auch den Fall ein, dass eine der beiden Messungen ohne Kompensation erfolgt. Daraus ergeben sich unter anderem zwei Vorteile: Erstens ist der Berechnungsaufwand nur halb so groß, und zweitens können mit einer geeigneten Kompensation bei der zweiten Messung bereits in einem einzigen Identifikationsschritt die Prozessparameter gut berechnet werden, da sich die Kompensationsparameter bei beiden Messungen ausreichend unterscheiden.

Bei Identifikation der Prozessparameter kann die Kompensation einer bestimmten Ordnung r oder Frequenz $\omega_S$ auch ganz ohne Kenntnisse der Störung und des Prozesses an sich erfolgen. Dazu kann zunächst eine Messung ohne Kompensation und eine mit dazu unterschiedlichen Kompensationseinstellungen zur Erstidentifikation der Prozessparameter erfolgen. Mit diesen Werten kann eine Kompensation mit variablen Parametern oder mit einer Regelung ausgeführt werden. Umfangreiche Berechnungen beim Betrieb der Maschine entfallen dann. Besonderer Vorteil einer adaptiven Kompensationsregelung mit Online-Identifikation ist über die Vorteile der einfachen Kompensationsregelung hinaus, dass auch bei sich während des Betriebs der Maschine stark verändernden Prozessparametern eine gute Kompensation erreicht werden kann. Dadurch, dass die komplexe Berechnung der Identifikation nicht zeitkritisch ist, kann auch sie auf günstige Hardware und gegebenenfalls sogar neben der normalen Maschinenregelung auf vorhandener Regler-Hardware ausgeführt werden.

Es ist noch festzuhalten, dass bei Einsatz eines Filters die Verwendung von definierten Filtereinschwingzeiten variierbar ist. Mit anderen Worten, kann durch die Wahl der Einschwingdauer beispielsweise eine schnelle Reduktion großer Schwingungsamplituden erreicht werden oder bei relativ gesehen längerer Einschwingzeit die Schwingung zunehmend besser reduziert beziehungsweise eliminiert werden..

Für den Fachmann ist klar, dass auch eine Anwendung des erfindungsgemäßen Verfahrens auch bei nichtlinearen Prozessen, bei denen sich gewisse unterschiedliche Ordnungen oder Frequenzen gegenseitig beeinflussen, wenn auch eingeschränkt, möglich ist. Ein wichtiger Punkt bei der Bekämpfung von Störungen in einem nichtlinearen Prozess ist, dass eine gezielte Vermeidung von gleichzeitigen Änderungen des Kompensationssignals von sich gegenseitig beeinflussenden Ordnungen bei der Prozessidentifikation beziehungsweise eine Beschränkung der Identifikation auf solche Messpunkte, bei denen sich gegenseitig beeinflussende Signale nicht gleichzeitig wesentlich ändern, vorgenommen wird.

Das erfindungsgemäße Verfahren kann an einer bestimmten reellen oder virtuellen Maschinenwelle in einem Druckwerk oder in einer Druckwerksgruppe, also in einem ein oder mehrere Druckwerke aufweisenden Maschinenteil, ausgeführt sein. Insbesondere kann das erfindungsgemäße Verfahren auch auf die Schwingungskompensation für die Relativposition, Relativgeschwindigkeit oder Relativbeschleunigung zwischen verschiedenen Maschinenteilen angewendet werden. Die Maschinenwelle wird vermittels eines Aktuators direkt oder indirekt angesteuert, und das Druckwerk oder die Druckwerksgruppe weist eine Messeinrichtung zur Aufnahme der Schwingung der Maschinenwelle auf. Vermittels wenigstens eines der Messeinrichtung zugeordneten Filters, insbesondere ein Bandpassfilters oder dergleichen, wird die Amplitude und Phase einer Anzahl n diskreter Frequenzanteile mit Kreisfrequenz $\omega_{Si}$, wobei i = 1 bis n eine natürliche Zahl ist, bestimmt. Aus dieser Messung wird auf elektronischem Wege ein Steuersignal generiert, sodass vermittels des Aktuators eine Kompensation auf die Maschinenwelle möglich ist. Für den Fachmann ist klar, dass das erfindungsgemäße Verfahren auch auf mehrere Maschinenwellen innerhalb eines oder mehrerer Druckwerke oder Druckwerksgruppen angewendet werden kann. Eine erfindungsgemäße Druckmaschine weist wenigstens ein Druckwerk oder eine Druckwerksgruppe dieser Art auf.

**Bezugszeichenliste**

| | |
|---|---|
| 1 | Störungsquelle |
| 2 | Schwingung a mit Amplitude $a_0$ und Phase $\alpha$ |
| 3 | Summationsstelle |
| 4 | Signal |
| 5 | Messeinrichtung |
| 6 | gemessenes Signal |
| 7 | Filter |
| 8 | Messsignal c mit Amplitude $c_0$ und Phase $\gamma$ |
| 9 | Recheneinheit |
| 10 | Stellgröße b mit Amplitude $b_0$ und Phase $\beta$ |
| 1 1 | Aktuator |
| 13 | Prozess |
| 14 | harmonisches Moment mit Amplitude $K_P b_0$ und Phase $\beta + \varphi_P$ |

**Patentansprüche**

**1.** Verfahren zur Kompensation einer mechanischen Schwingung (2), insbesondere einer Rotationsschwingung, die eine durch eine Anzahl diskreter Frequenzanteile näherungsweise darstellbares Frequenzspektrum aufweist, an einer Maschinenwelle, insbesondere in einem Druckwerk oder in einer Druckmaschine, vermittels wenigstens eines direkt oder indirekt auf die Maschinenwelle einwirkenden Aktuators (11), wobei die Amplitude und Phase wenigstens eines diskreten Frequenzanteils an wenigstens einem bestimmten Zeitpunkt aus dem Frequenzspektrum durch Messung bestimmt wird und dem wenigstens einen der diskreten Frequenzanteile der mechanischen Schwingung (2) unabhängig von den anderen Frequenzanteilen wenigstens ein im Wesentlichen harmonisches Moment (14) gleicher Frequenz mit bestimmter Amplitude und Phase derart vom Aktuator (11) überlagert wird, dass die Amplitude der Schwingung der Maschinenwelle bei dieser Frequenz reduziert wird,
**dadurch gekennzeichnet,**
**dass** wenigstens ein Paar von Amplituden und Phasen des kompensierenden im Wesentlichen harmonischen Momentes (14) in einem geschlossenen adaptiven Regelkreis berechnet wird, wobei die zur Berechnung erforderlichen Prozessparameter auf Basis wenigstens zweier Messungen des diskreten Frequenzanteils zu verschiedenen Zeitpunkten mit unterschiedlichen Kompensationsparametem während der Regelung aktualisiert werden.

2. Verfahren zur Kompensation einer mechanischen Schwingung (2) gemäß Anspruch 1,
**dadurch gekennzeichnet,**
**dass** das im Wesentlichen harmonische Moment (14) eine Frequenz aufweist, welche im wesentlichen unabhängig von der Zeit ist.

3. Verfahren zur Kompensation einer mechanischen Schwingung (2) gemäß Anspruch 1 oder Anspruch 2,
**dadurch gekennzeichnet,**
**dass** die Frequenz des im Wesentlichen harmonischen Moments (14) in einem festen Verhältnis r, wobei r eine reelle Zahl ist, zur Maschinengeschwindigkeit steht.

4. Verfahren zur Kompensation einer mechanischen Schwingung (2) gemäß einem der oberen Ansprüche,
**dadurch gekennzeichnet,**
**dass** die Amplitude und Phase des im Wesentlichen harmonischen Moments (14) zur Kompensation unabhängig von der Maschinengeschwindigkeit ist.

5. Verfahren zur Kompensation einer mechanischen Schwingung (2) gemäß Anspruch 1 bis 3,
**dadurch gekennzeichnet,**
**dass** die Amplitude und Phase des harmonischen Momentes (14) zur Kompensation eine Funktion der Maschinengeschwindigkeit ist.

6. Verfahren zur Kompensation einer mechanischen Schwingung (2) gemäß einem der oberen Ansprüche,
**dadurch gekennzeichnet,**
**dass** die Amplitude oder Phase des kompensierenden harmonischen Momentes (14) aus einer Messung der Amplitude und Phase des korrespondierenden Frequenzanteils des Frequenzspektrums der mechanischen Schwingung (2) der Maschinenwelle und/oder eines aus dem Signal einer oder mehrerer Maschinenwellen berechneten Signals, insbesondere des Differenzsignals einer oder mehrerer Maschinenwellen, bestimmt ist.

7. Verfahren zur Kompensation einer mechanischen Schwingung (2) gemäß einem der oberen Ansprüche,
**dadurch gekennzeichnet,**
**dass** die zur Berechnung der Amplitude und Phase des korrespondierenden, im Wesentlichen harmonischen Momentes (14) erforderlichen Prozessparameter wenigstens teilweise aus Messungen der Amplitude und Phase des korrespondierenden Frequenzanteils der mechanischen Schwingung (2) der Maschinenwelle bestimmt sind.

8. Verfahren zur Kompensation einer mechanischen Schwingung (2) gemäß einem der oberen Ansprüche,
**dadurch gekennzeichnet,**
**dass** die Frequenz des im Wesentlichen harmonischen Momentes (14) in Abhängigkeit von der Eigenfrequenz der Maschine bestimmt wird.

9. Verfahren zur Kompensation einer mechanischen Schwingung (2) gemäß einem der oberen Ansprüche,
**dadurch gekennzeichnet,**
**dass** die Frequenz des im Wesentlichen harmonischen Momentes (14) in Abhängigkeit von der Geschwindigkeit der Maschine bestimmt wird.

10. Druckwerk mit wenigstens einer vermittels eines Aktuators (11) angesteuerten Maschinenwelle und einer Messeinrichtung (5) zur Aufnahme einer mechanischen Schwingung (2), die eine durch eine Anzahl diskreter Frequenzanteile näherungsweise darstellbares Frequenzspektrum aufweist, der Maschinenwelle, wobei der Aktuator (11) geeignet ist, wenigstens ein im Wesentlichen harmonisches Moment (14) wenigstens einer Frequenz der diskreten Frequenzanteile unabhängig von den anderen Frequenzanteilen mit bestimmter Amplitude und Phase derart der mechanischen Schwingung (2) zu überlagern, dass die Amplitude der Schwingung der Maschinenwelle bei dieser Frequenz reduziert wird,
**dadurch gekennzeichnet,**
**dass** das Druckwerk ein Filter (7) oder einen Korrelator (7) zwecks Bestimmung von Amplitude und Phase einer Anzahl diskreter Frequenzanteile des Frequenzspektrums der mechanischen Schwingung (2) aufweist, sowie eine Recheneinheit (9) zur Berechnung wenigstens eines Paares von Amplituden und Phasen des kompensierenden im Wesentlichen harmonischen Momentes (14) in einem geschlossenen adaptiven Regelkreis und zur Aktualisierung der erforderlichen Prozessparameter auf Basis wenigstens zweier Messungen des diskreten Frequenzanteils zu verschiedenen Zeitpunkten mit unterschiedlichen Kompensationsparametern während der Regelung umfasst.

**11.** Druckwerksgruppe,
**dadurch gekennzeichnet,**
**dass** die Druckwerksgruppe wenigstens ein Druckwerk gemäß Anspruch 10 aufweist.

**12.** Druckmaschine,
**dadurch gekennzeichnet,**
**dass** die Druckmaschine wenigstens ein Druckwerk gemäß Anspruch 10 oder eine Druckwerksgruppe gemäß Anspruch 11 aufweist.

**Claims**

**1.** Method for compensating for a mechanical oscillation (2), in particular a rotational oscillation having a frequency spectrum capable of being approximated by a number of discrete frequency components, at a machine shaft, in particular in a printing unit or in a printing machine, by means of at least one actuator (11) acting directly or indirectly on the machine shaft, the amplitude and phase of at least one discrete frequency component of the frequency spectrum being determined by measuring at at least one given point in time and at least one substantially harmonic torque (14) of the same frequency and with a given amplitude and phase being superposed by the actuator (11) upon the at least one of the discrete frequency components of the mechanical oscillation (2) independently of the other frequency components in such a way that the amplitude of the oscillation of the machine shaft is reduced at this frequency,
**characterized in**
**that** at least one pair of amplitudes and phases of the compensating, substantially harmonic torque (14) is calculated in an adaptive closed-loop control unit, with the process parameters required for the calculation being updated during the controlling based on at least two measurements of the discrete frequency component at various points in time with different compensation parameters.

**2.** Method for compensating for a mechanical oscillation (2) according to claim 1,
**characterized in**
**that** the substantially harmonic torque (14) has a frequency that is substantially independent of time.

**3.** Method for compensating a mechanical oscillation (2) according to claim 1 or 2,
**characterized in**
**that** the frequency of the substantially harmonic torque (14) is at a fixed ratio r to the machine speed, r being a real number.

**4.** Method for compensating a mechanical oscillation (2) according to one of the preceding claims,
**characterized in**
**that** the amplitude and phase of the substantially harmonic torque (14) for compensation are independent of the machine speed.

**5.** Method for compensating a mechanical oscillation (2) according to claim 1 to 3,
**characterized in**
**that** the amplitude and phase of the harmonic torque (14) for compensation are a function of the machine speed.

**6.** Method for compensating a mechanical oscillation (2) according to one of the preceding claims,
**characterized in**
**that** the amplitude or phase of the compensating harmonic torque (14) is determined from a measurement of the amplitude and phase of the corresponding frequency component of the frequency spectrum of the mechanical oscillation (2) of the machine shaft and/or of a signal that is calculated from the signal of one or more machine shafts, in particular of the differential signal of one or more machine shafts.

**7.** Method for compensating a mechanical oscillation (2) according to one of the preceding claims,
**characterized in**
**that** the process parameters required for calculating the amplitude and phase of the corresponding, substantially harmonic torque (14) are at least partially determined from measurements of the amplitude and phase of the corresponding frequency component of the mechanical oscillation (2) of the machine shaft.

**8.** Method for compensating a mechanical oscillation (2) according to one of the preceding claims, **characterized in that** the frequency of the substantially harmonic torque (14) is determined as a function of the natural frequency of the machine.

**9.** Method for compensating for a mechanical oscillation (2) according to one of the preceding claims, **characterized in that** the frequency of the substantially harmonic torque (14) is determined as a function of the speed of the machine.

**10.** Printing unit having at least one machine shaft driven by an actuator (11) and a measuring device (5) for picking up a mechanical oscillation (2) of the machine shaft, the oscillation (2) having a frequency spectrum capable of being approximated by a number of discrete frequency components, the actuator (11) being suitable to superpose at least one substantially harmonic torque (14) of at least one frequency of the discrete frequency components independently of the other frequency components with a given amplitude and phase upon the mechanical oscillation (2) in such a way that the amplitude of the oscillation of the machine shaft at this frequency is reduced, **characterized in that** the printing unit has a filter (7) or a correlator (7) for determining the amplitude and phase of a number of discrete frequency components of the frequency spectrum of the mechanical oscillation (2), an arithmetic unit (9) for calculating at least one pair of amplitudes and phases of the compensating, substantially harmonic torque (14) in an adaptive closed-loop control unit and for updating the required process parameters based on at least two measurements of the discrete frequency component at various points in time with different compensation parameters during the controlling.

**11.** Printing unit group, **characterized in that** the printing unit group has at least one printing unit according to claim 10.

**12.** Printing machine, **characterized in that** the printing machine comprises at least one printing unit according to claim 10 or a printing unit group according to claim 11.

**Revendications**

**1.** Procédé pour compenser une vibration mécanique (2), notamment une vibration rotatoire, comportant un spectre de fréquences pouvant être représenté approximativement par un nombre de fractions discrètes de fréquences, sur un arbre de machine, notamment dans une unité d'impression ou dans une machine à imprimer et ce, à l'aide d'un actionneur (11) au moins, exerçant une action directe ou indirecte sur l'arbre de la machine, l'amplitude et la phase d'une fraction discrète au moins du spectre des fréquences étant déterminées par mesure à au moins un instant défini dudit spectre des fréquences, et étant superposé par ledit actionneur (11), audit instant d'au moins une des fractions des fréquences discrètes de la vibration mécanique (2), un moment au moins essentiellement harmonique (14) de même fréquence et d'une amplitude et phase déterminées, si bien que l'amplitude de la vibration de l'arbre de la machine est réduite au niveau de cette fréquence , **caractérisé en ce qu'**une paire au moins d'amplitudes et de phases du moment essentiellement harmonique (14) à vocation compensatoire sont calculées dans un réglage adaptif à boucle .fermée, les paramètres process nécessaires au calcul étant actualisés sur la base de deux mesures au moins de la fraction discrète des fréquences, effectuées à des moments différents au moycn de différents paramètres de compensation durant la régulation.

**2.** Procédé pour compenser une vibration mécanique (2) selon la revendication 1, **caractérisé en ce que** le moment essentiellement harmonique (14) comporte une fréquence essentiellement indépendante du temps.

**3.** Procédé pour compenser une vibration mécanique (2) selon la revendication 1 ou 2, **caractérisé en ce que** le rapport r de la fréquence du moment essentiellement harmonique (14) à la vitesse de la machine est fixe, r étant un nombre réel.

**4.** Procédé pour compenser une vibration mécanique (2) selon l'une quelconque des revendications précédentes, caractérisa en ce que l'amplitude et la phase du moment essentiellement harmonique (14), en vue de la compensation, sont indépendantes de la vitesse de la machine.

**5.** Procédé pour compenser une vibration mécanique (2) selon les revendications 1 à 3, **caractérisé en ce que** l'amplitude et la phase du moment harmonique (14), en vue de la compensation, sont une fonction de la vitesse de la machinc.

**6.** Procédé pour compenser une vibration mécanique (2) selon l'une des revendications qui précèdent, **caractérisé en ce que** l'amplitude ou la phase du moment harmonique (14), en vue de la compensation, est déterminée à partir d'une mesure de l'amplitude et de la phase de la fraction correspondante du spectre de fréquences de l'oscillation mécanique (2) de l'arbre de la machine et/ou d'un signal calculé à partir du signal d'un ou de plusieurs arbres, notamment du signal différentiel d'un ou de plusieurs arbres.

**7.** Procédé pour compenser une vibration mécanique (2) selon l'une des revendications qui précèdent, **caractérisé en ce que** les paramètres process nécessaires au calcul de l'amplitude et de la phase du moment essentiellement harmonique (14) correspondant sont déterminés partiellement au moins à partir de mesures de l'amplitude et de la phase de la fraction des fréquences correspondante de la vibration mécanique (2) de l'arbre de la machine.

**8.** Procédé pour compenser une vibration mécanique (2) selon l'une des revendications qui précèdent, **caractérisé en ce que** la fréquence du moment essentiellement harmonique (14) est déterminée en fonction de la fréquence propre de la machine.

**9.** Procédé pour compenser une vibration mécanique (2) selon l'une des revendications qui précèdent, **caractérisé en ce que** la fréquence du moment essentiellement harmonique (14) est déterminée en fonction de la vitesse de la machine.

**10.** Unité d'impression avec un arbre de machine au moins commandé à l'aide d'un actionneur (11) et un dispositif de mesure (5) destiné au captage d'une vibration mécanique (2) de l'arbre de machine, ladite vibration mécanique comportant un spectre de fréquences pouvant être représenté approximativement par un nombre de fractions discrètes des fréquences, l'actionncur (11) étant alors apte à superposer sur la vibration mécanique (2) au moins un moment essentiellement harmonique (14) d'une fréquence au moins des fractions discrètes desdites fréquences et ce, indépendamment des autres fractions des fréquences avec amplitude et phase définies, de telle sorte que l'amplitude de la vibration de l'arbre de la machine est réduite en présence de ladite fréquence, **caractérisée en ce que** ladite unité d'impression comprend un filtre (7) ou un corrélateur (7) destiné à déterminer l'amplitude et la phase d'un nombre de fractions discrètes du spectre des fréquences dc la vibration mécanique (2), de même qu'un organe de calcul (9) en vue du calcul d'une paire au moins d'amplitudes et de phases du moment essentiellement harmonique (14) à vocation compensatoire, dans un réglage adaptif à boucle fermée, et en vue de l'actualisation des paramètres proccss nécessaires, sur la base de deux mesures au moins de la fraction discrète des fréquences à des instants différents et avec différents paramètres de compensation durant la régulation.

**11.** Groupe d'unités d'impression, **caractérisé en ce que** ledit groupe d'unités d'impression comprend une unité d'impression au moins selon la revendication 10.

**12.** Machine à imprimer, **caractérisée en ce que** ladite machine à imprimer comporte une unité d'impression au moins selon la revendication 10 ou un groupe d'unités d'impression selon la revendication 11.

Fig.1